# EUROPÄISCHE PATENTANMELDUNG

(11) **EP 2 027 795 A1**
(43) Veröffentlichungstag der Anmeldung: **25.02.2009**
(21) Anmeldenummer: 08014095.7
(22) Anmeldetag: 07.08.2008
(51) Int. Cl.: A47F 1/06, B65D 19/20

(54) **Warenpräsentationseinrichtung**

(30) Priorität: 21.08.2007 DE 202007011680 U
(71) Anmelder: FESTO AG & Co. KG, 73734 Esslingen (DE); MTD Products AG, 66129 Saarbrücken-Bübingen (DE)
(72) Erfinder: Noack, Michael, 66497 Contwig (DE); Schwarz, Stefan, 72655 Altdorf (DE); Preußler, Udo, 70771 Leinfelden-Echterdingen (DE)
(74) Vertreter: Vogler, Bernd

(57) **Zusammenfassung**

Bei einer Warenpräsentationseinrichtung, mit einem über Füße (14) abstellbaren Basisteil (15), das eine Hubvorrichtung (16) mit einem über Hubmittel anhebbaren, Waren tragenden Hubboden (33) und einer der Hubvorrichtung (16) zugeordneten Ansteuereinrichtung (40) zum Ansteuern der Hubmittel aufweist, ist die Ansteuereinrichtung (40) Bestandteil eines in einen Aufnahmeschacht (30) am Basisteil (15) einschiebbaren, oberhalb der Füße (14) angeordneten, austauschbaren Einschubmoduls (31).

## Beschreibung

Die Erfindung betrifft eine Warenpräsentationseinrichtung, mit einem über Füße abstellbaren Basisteil, das eine Hubvorrichtung, mit einem über Hubmittel anhebbaren, Waren tragenden Hubboden und einer der Hubvorrichtung zugeordneten Ansteuereinrichtung zum Ansteuern der Hubmittel aufweist.

Aus der DE 10 2004 048 428 A1 geht eine Warenpräsentationseinrichtung dieser Art hervor, wobei hier eine Hebeeinrichtung vorgesehen ist, die ein durch Fluidinnendruck aufweitbares Kissen aufweist, wodurch sich ein Waren tragender Behälterboden anheben lässt. Die Warenpräsentationsvorrichtung, die hier als Behälter bezeichnet wird, besteht aus einer Palette mit Füßen, auf die Palette aufgesteckten Seitenwänden und der Hebeeinrichtung. Ferner ist eine Ansteuereinrichtung zur Ansteuerung der Hebeeinrichtung vorgesehen, die in einem der Palettenfüße untergebracht ist und als Komponenten eine Pumpe, ein Ventil und eine Schaltereinrichtung aufweist, die zu einer Baueinheit zusammengefasst sind.

Die Unterbringung der Ansteuereinrichtung im Palettenfuß ist aufwändig. Ferner ist bei Beschädigung bzw. Funktionsstörung einer der Komponenten der Ansteuereinrichtung die Palette und somit die gesamte Warenpräsentationseinrichtung nicht mehr verwendbar.

Aufgabe der Erfindung ist es daher, eine Warenpräsentationseinrichtung der eingangs erwähnten Art zu schaffen, die gegenüber herkömmlichen aus dem Stand der Technik bekannten Warenpräsentationseinrichtungen flexibler handhabbar und universell einsetzbar ist.

Diese Aufgabe wird durch eine Warenpräsentationseinrichtung mit den Merkmalen des unabhängigen Anspruchs 1 gelöst. Weiterbildungen der Erfindung sind in den Unteransprüchen dargestellt.

Die erfindungsgemäße Warenpräsentationseinrichtung zeichnet sich dadurch aus, dass die Ansteuereinrichtung Bestandteil eines in einen Aufnahmeschacht am Basisteil einschiebbaren, oberhalb der Füße angeordneten, austauschbaren Einschubmoduls ist.

Dadurch ist es bei Beschädigung oder Funktionsstörung einer der Komponenten der Ansteuereinrichtung lediglich notwendig, das Einschubmodul auszutauschen und gegen ein voll funktionsfähiges zu ersetzen. Bei Lagerhaltung von Reserve-Einschubmodulen ist der Austausch schnell und kostengünstig durchführbar. Die Warenpräsentationseinrichtung kann also nach kurzer Zeit wieder genutzt werden.

In besonders bevorzugter Weise sind die Füße Bestandteil einer vom Basisteil separaten, das Basisteil tragenden Tragpalette. Das Einschubmodul befindet sich also nicht in der Tragpalette, sondern in einem separate Bauteil, nämlich dem Basisteil. Es ist also nicht notwendig, spezielle Tragpaletten mit in einem der Palettenfüße integrierter Ansteuereinrichtung zu verwenden, sondern es können handelsübliche Standard-Tragpaletten eingesetzt werden. Dies bietet den Vorteil, Standard-Tragpaletten mit einer Hubvorrichtung nachzurüsten.

Ferner ist es auch möglich, Basisteile gegeneinander auszutauschen, falls beispielsweise in der im Basisteil integrierten Hubvorrichtung eine Beschädigung oder Funktionsstörung vorliegt.

In besonders bevorzugter Weise ist eine fluidische Hubvorrichtung vorgesehen, mit Hubmitteln in Form von mehreren unabhängig voneinander mittels Druckfluid befüllbaren fluidischen Aktoren. Vorzugsweise wird als Druckfluid Druckluft verwendet.

Zweckmäßigerweise werden die fluidischen Aktoren von mittels Fluiddruck aufweitbaren Hubkissen gebildet. Es ist also möglich, eine Hubkissenanordnung mit mehreren unabhängig voneinander aufweitbaren Hubkissen vorzusehen.

Besonders bevorzugt ist den Hubkissen jeweils eine Aufweitungsbegrenzungseinrichtung zur Begrenzung der Hubkissenaufweitung zugeordnet, derart, dass Ober- und Unterseite im aufgeweiteten Zustand des Hubkissens parallel zueinander ausgerichtete Auflageflächen bilden. Dadurch kann verhindert werden, dass der Hubboden und damit die darauf gelagerten Waren beim Aufweiten der Hubkissen in Schräglage kommen.

Zweckmäßigerweise wird die Aufweitungsbegrenzungseinrichtung durch eine im Hubkissen integrierte Zugfadenanordnung mit mehreren Zugfäden gebildet.

Bei einer Weiterbildung der Erfindung weist das Einschubmodul ein Modulgehäuse auf, in dem die Komponenten der Ansteuereinrichtung untergebracht sind. Alternativ wäre auch eine gehäuselose Variante möglich, beispielsweise nach Art einer mit den Komponenten der Ansteuereinrichtung bestückten Einschubleiste.

In besonders bevorzugter Weise weist die Ansteuereinrichtung eine Ventileinrichtung zur Ansteuerung der Hubmittel, eine Steuereinheit zur Ansteuerung der Ventileinrichtung, eine der Ventileinrichtung vorgeschaltete Fluidversorgungseinrichtung, eine Stromversorgungseinrichtung und eine mit der Steuereinheit gekoppelte Aktivierungseinrichtung zur Aktivierung der Hubvorrichtung auf.

Zweckmäßigerweise besitzt die Ansteuereinrichtung ferner noch insbesondere am Ausgang der Ventileinrichtung sitzende, mit der Steuereinheit gekoppelte Drucksensoren zur Drucküberwachung des in den fluidischen Aktoren, insbesondere Hubkissen, herrschenden Ist-Fluiddrucks. Dadurch ist ein definiertes Aufweiten bzw. Aufpumpen der Hubkissen bis zu einem zweckmäßigerweise in der Steuereinheit hinterlegten Maximal-Fluiddruck möglich. Ist der Maximal-Fluiddruck erreicht, kann das Aufweiten des oder der Hubkissen abgebrochen werden. Es ist ebenfalls möglich, einen Mindest-Fluidruck vorzugeben, mit dem ein im Betriebszustand befindliches Hubkissen zu beaufschlagen ist. Bei Unterschreitung des Mindest-Fluiddrucks kann Druckfluid nachgefüllt werden.

Bei einer Weiterbildung der Erfindung weist die Fluidversorgungseinrichtung wenigstens einen an Bord des Einschubmoduls befindlichen Fluiddruckerzeuger, insbesondere Kompressor, auf. Alternativ oder zusätzlich ist es möglich, einen externen Fluiddruckerzeuger zu verwenden, der über Fluidleitungen mit dem Einschubmodul gekoppelt werden kann.

Bei einer Weiterbildung der Erfindung weist die Fluidversorgungseinrichtung wenigstens einen der Ventileinrichtung vorgeschalteten, insbesondere an Bord des Einschubmoduls befindlichen Druckspeicher auf. Dadurch ist es möglich, dass auch bei Ausfall des Fluiddruckerzeugers Druckfluid zur Verfügung steht, nämlich solches das im Druckspeicher gespeichert ist. Selbstverständlich ist es auch möglich, dass der Fluiddrukkerzeuger direkt ohne Zwischenschaltung eines Druckspeichers auf die Ventileinrichtung wirkt.

Es ist möglich, dass die Stromversorgungseinrichtung wenigstens einen an Bord des Einschubmoduls befindlichen, netzunabhängigen Stromversorger aufweist. Dies kann beispielsweise wenigstens ein Akkumulator und/oder wenigstens eine Batterie sein. Alternativ oder zusätzlich kann auch eine Netzversorgung vorgesehen sein.

Bei einer Weiterbildung der Erfindung weist die Aktivierungseinrichtung einen mittels Signalübertragung von Aktivierungssignalen mit der Steuereinheit gekoppelten Aktivierungsschalter auf. Besonders bevorzugt sitzt der Aktivierungsschalter an einem externen Aktivierungsmodul, wobei die Signalübertragung zur Steuereinheit drahtlos, insbesondere per Funk erfolgt. Es ist jedoch auch eine optische Fernübertragung möglich. Alternativ ist es jedoch auch möglich, einen an der Warenpräsentationseinrichtung, beispielsweise am Basisteil sitzenden Aktivierungsschalter vorzusehen.

Besonders bevorzugt weist die Aktivierungseinrichtung einen Auswahlschalter auf, der zwischen einer die Aktivierung mittels des Aktivierungsschalters ermöglichenden Ein-Stellung und einer die Aktivierung blockierenden Aus-Stellung umschaltbar ist. Bevor eine Aktivierung möglich ist, muss die Warenpräsentationseinrichtung also zunächst über den Auswahlschalter freigeschaltet werden. Dies soll verhindern, dass die Hubvorrichtung aus Versehen betätigt wird, beispielsweise durch zufälliges Drücken des Aktivierungsschalters.

Zweckmäßigerweise befindet sich der Auswahlschalter am Einschubmodul. Die Betätigung des Auswahlschalters ist mechanisch z. B. per Hand oder Fuß und/oder per Fernübertragung, beispielsweise per Funk oder optisch, möglich.

Bei einer Weiterbildung der Erfindung weist das Basisteil einen Rahmen auf, in dessen Rahmenwandung eine zur Rahmenoberkante hin offenen schlitzartige Aufnahmeöffnung zum Einstekken von Seitenwänden ausgebildet ist.

Zweckmäßigerweise ist dem Rahmen eine Rasteinrichtung zum Verrasten der Seitenwände in der Aufnahmeöffnung zugeordnet.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeipiels der erfindungsgemäßen Warenpräsentationseinrichtung,
- Figur 2: die Warenpräsentationsvorrichtung von Figur 1 im Längsschnitt entlang der Linie II-II von Figur 1,
- Figur 3: eine perspektivische Darstellung eines Basisteils der Warenpräsentationseinrichtung von Figur 1,
- Figur 4: eine vergrößerte Darstellung des Basisteils ohne Hubeinrichtung und Einschubmodul,
- Figur 5: einen schematischen Längsschnitt durch das Basisteil von Figur 3 entlang der Linie V-V in Figur 3,
- Figur 6: eine perspektivische Darstellung des Einschubmoduls zum Einschieben in das Basisteil und
- Figur 7: eine schematische Darstellung des inneren Aufbaus des Einschubmoduls von Figur 6.

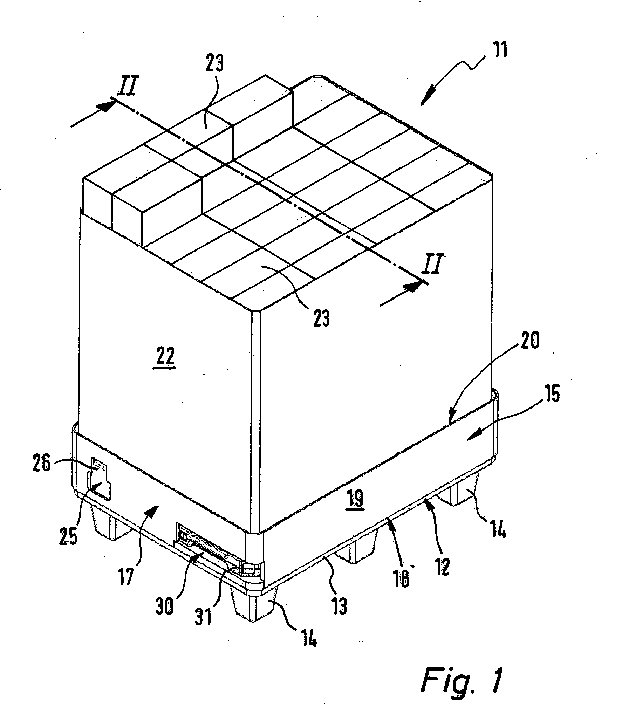

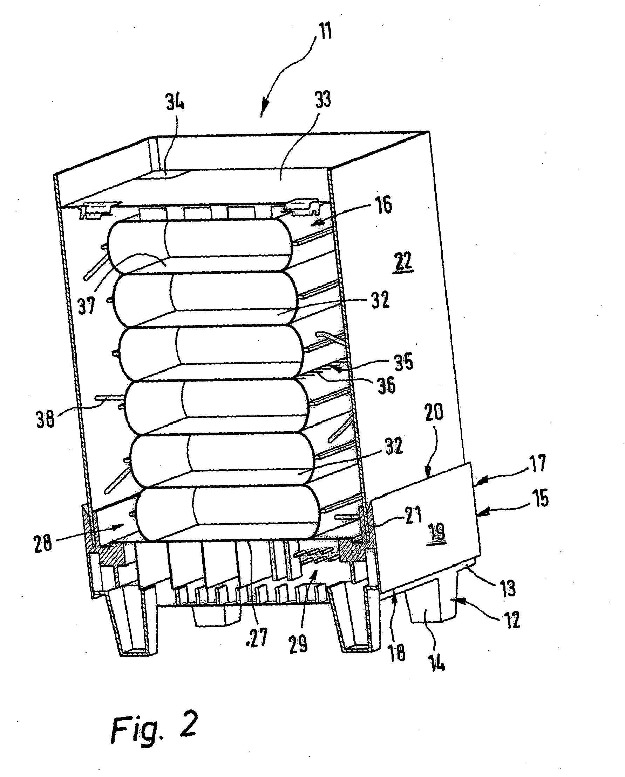

Die Figuren 1 und 2 zeigen ein bevorzugtes Ausführungsbeispiel der erfindungsgemäßen Warenpräsentationseinrichtung 11. Die Warenpräsentationseinrichtung 11 ist modular aufgebaut und besitzt eine Tragpalette 12 mit einer Grundplatte 13 und von dieser nach unten abstehende Füße 14 sowie ein auf die Grundplatte 13 der Tragpalette 12 aufgesetztes Basisteil 15, in dem sich eine Hubvorrichtung 16 befindet.

Als Tragpalette 12 ist eine handelsübliche Standard-Tragpalette vorgesehen, die aufgrund ihrer Füße 14 von einer Hubgabel eines Gabelstaplers untergriffen werden kann.

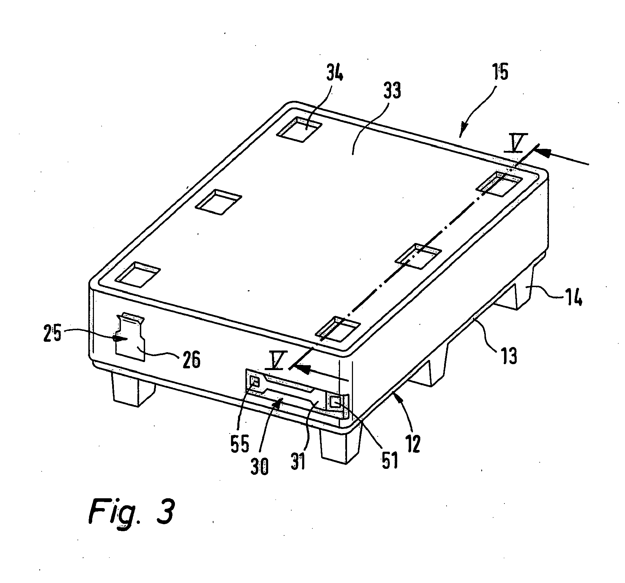

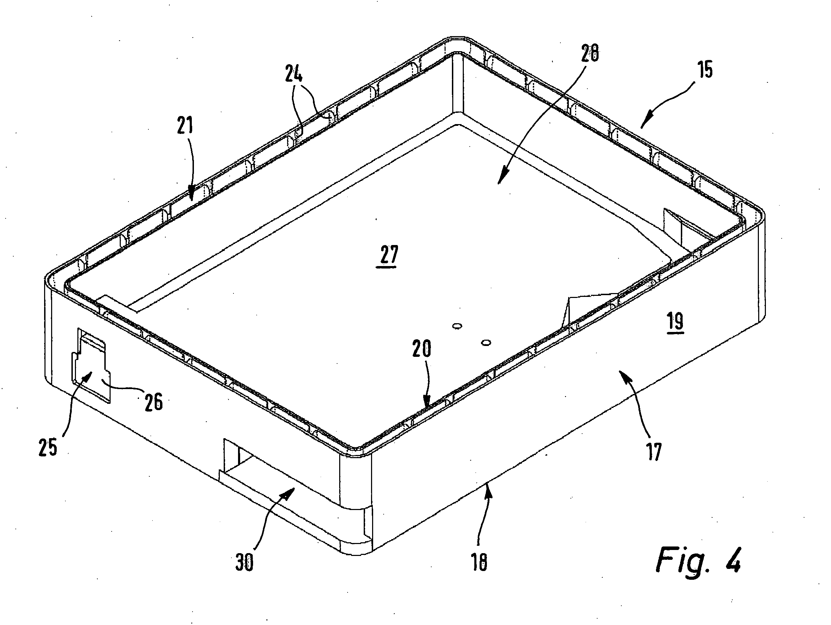

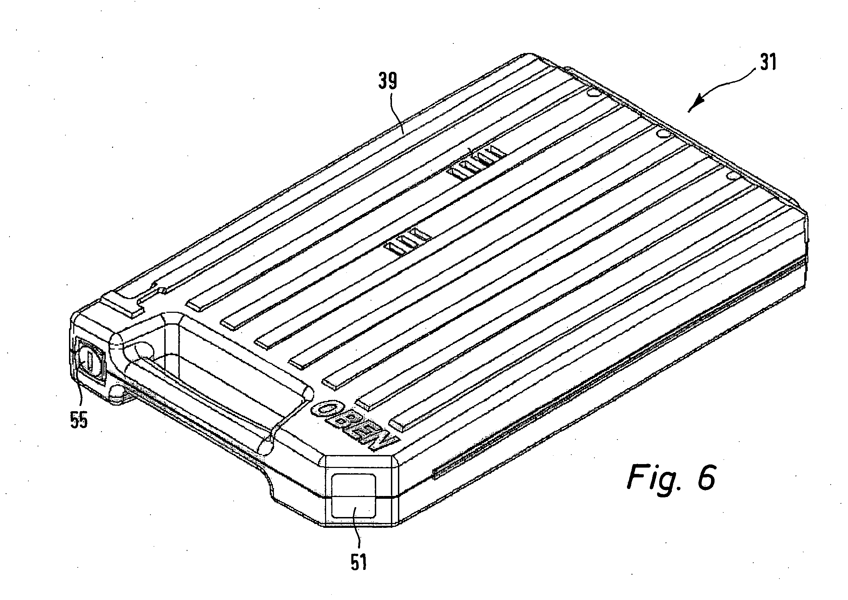

Das Basisteil 15 ist insbesondere lose auf die Tragpalette 12 aufgesetzt und kann daher jederzeit wieder abgenommen werden. Als Basisteil-Material eignet sich beispielsweise Kunststoff. Wie insbesondere in den Figuren 3 bis 6 gezeigt, weist das Basisteil 15 eine rechteckige Grundform auf. Es ist ein Rahmen 17 vorgesehen, dessen Querschnitt etwas größer ist als der Querschnitt der Grundplatte 13 der Tragpalette 12, wodurch die Unterkante 18 des Rahmens 17 beim Aufsetzen die Rahmenoberkante 20 der Grundplatte 13 überlappt, was für eine Seitenfixierung des Basisteils 15 auf der Tragplatte 12 sorgt. Der Rahmen 17 besitzt ferner eine Rahmenwand 19, in der sich eine zur Rahmenoberkante 20 hin offene schlitzartige Aufnahmeöffnung 21 zum Einstecken von Seitenwänden 22 befindet. Die Seitenwände 22 bestehend zweckmäßigerweise aus Pappmaterial, wodurch eine Entsorgung in einfacher Weise möglich ist, falls die in der Warenpräsentationseinrichtung 11 befindlichen Waren 23 vollständig vergriffen sind. Wie insbesondere in Figur 4 gezeigt, befinden sich an den Innenseiten der vorderen und hinteren Wand, die die Aufnahmeöffnung 21 begrenzen, jeweils nach innen ragende stegartige Vorsprünge 24, wobei die stegartigen Vorsprünge an der vorderen Wand den stegartigen Vorsprüngen an der hinteren Wand gegenüberliegen. Die Seitenwände 22 werden dann in den Bereich zwischen den einander gegenüberliegenden Vorsprüngen 24 eingesteckt. Es ist ferner noch eine Rasteinrichtung 25 zum Verrasten der Seitenwände 22 in der Aufnahmeöffnung 21 vorgesehen, die sich ebenfalls am Basisteil 15 befindet und von dessen Außenseite her bedient werden kann, beispielsweise durch Handhabe eines im Rahmen 17 des Basisteils 15 gelagerten Betätigungsgriffs 26. Durch dessen Betätigung werden die Seitenwände 22 in der Aufnahmeöffnung 21 verrastet. Das Basisteil 15 besitzt ferner einen Zwischenboden 27, der dieses in einen oberen Bereich 28 und in einen unteren Bereich 29 aufteilt, wobei sich im oberen Bereich die Hubvorrichtung 16 und im unteren Bereich ein Aufnahmeschacht 30 für ein nachfolgend näher beschriebenes Einschubmodul 31 befindet.

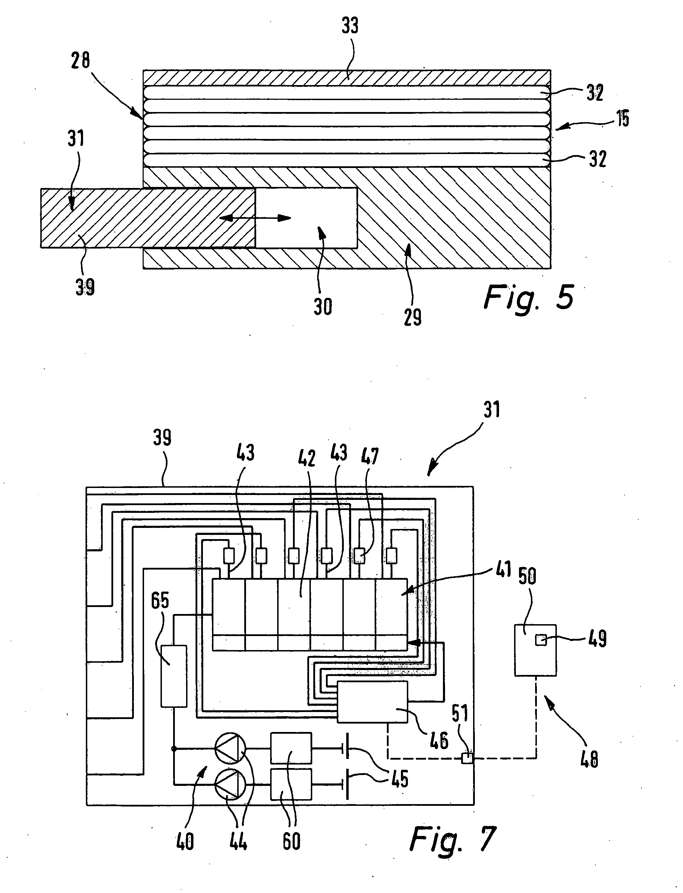

Es ist eine fluidische Hubvorrichtung 16 vorgesehen, mit Hubmitteln in Form von mehreren unabhängig voneinander mittels Druckfluid befüllbaren fluidischen Aktoren, die als mittels Fluiddruck aufweitbare Hubkissen 32 ausgebildet sind. Die Hubkissen 32 dienen zum Anheben eines Hubbodens 33, der wiederum die zu präsentierenden Waren 23 trägt. Als Druckfluid wird Druckluft verwendet. Wie insbesondere in Figur 5 dargestellt, lagern die Hubkissen 32 in Nichtgebrauchslage übereinander zusammengefaltet auf dem Zwischenboden 27, während der Hubboden 33 im Wesentlichen mit der Oberkante des Rahmens 17 abschließt (Figur 3). Dadurch entsteht ein kompaktes, gut handhabbares Basisteil 15. An der Oberseite des Hubbodens 33 befinden sich in etwa quadratisch ausgebildete Vertiefungen 34, in die Füße einer weiteren Tragpalette 12 aufgenommen werden können. Dadurch ist eine gute Stapelbarkeit solcher aus Basisteil 15 und Tragpalette 12 bestehender Module gewährleistet.

Die Figur 2 zeigt die Gebrauchslage der Hubkissen 32 beispielhaft in der Form, dass alle Hubkissen 32 mittels Druckluft aufgeweitet sind. Vorstehend wurde bereits erwähnt, dass die Hubkissen 32 unabhängig voneinander mit Druckluft befüllbar sind, so dass in Abhängigkeit von der Warenstandhöhe ein Hubkissen 32 nach dem anderen aufgeblasen wird, wodurch sich der Hubboden 33 dann anhebt.

Die Hubkissen 32 besitzen jeweils eine Aufweitungsbegrenzungseinrichtung zur Begrenzung der Hubkissenaufweitung in Form einer im jeweiligen Hubkissen 32 integrierten Zugfadenanordnung 35 mit mehreren Zugfäden 36. Die Hubkissenaufweitung wird derart begrenzt, dass in der Gebrauchslage Ober- und Unterseite des Hubkissens parallel zueinander ausgerichtete Auflageflächen 37 bilden. Dadurch wird verhindert, dass der Hubboden 33 beim Aufblasen wenigstens eines der Hubkissen 32 in Schräglage kommt, wodurch die darauf gelagerten Waren 32 verrutschen könnten. Wie insbesondere in Figur 2 gezeigt, ist zur unabhängigen Befüllung der Hubkissen 32 untereinander jedem Hubkissen ein separater Druckluftschlauch 38 zugeordnet, der einerseits über einen Druckluftanschluss in das jeweilige Hubkissen 32 einmündet und anderseits mit pneumatischen Anschlüssen bzw. Druckluftausgängen (nicht dargestellt) am Einschubmodul 31 verbunden ist.

Das Einschubmodul 31 ist wie erwähnt in den Aufnahmeschacht 30 am Basisteil, also oberhalb der Füße 14 der Tragpalette 12, einschiebbar und bei Bedarf austauschbar. Das Einschubmodul 31 besitzt ein Modulgehäuse 31, in dem sich Komponenten einer Ansteuereinrichtung 40 zum Ansteuern der Hubvorrichtung 16 befinden. Wie insbesondere in Figur 7 dargestellt, besitzt die Ansteuereinrichtung 40 eine Ventileinrichtung 41 mit der Anzahl der Hubkissen 32 entsprechenden Ventilen 42. Die Ventile 42 können als Piezo-Ventile ausgebildet sein. An den Ausgängen der Ventile 42 befinden sich Arbeitsanschlüsse 43, die über Fluidleitungen, beispielsweise Schläuche, mit den am Modulgehäuse 39 vorgesehenen Druckluftausgängen verbunden sind.

Die Druckluft die zur Ventileinrichtung 41 gelang stammt von einem an Bord des Einschubmoduls 31 befindlichen Drucklufterzeugers in Form wenigstens eines Kompressors 44. Gemäß bevorzugtem Ausführungsbeispiel sind zwei Kompressoren 44 vorgesehen. Die Kompressoren 44 sind jeweils elektrisch, insbesondere mittels Elektromotor 60, angetrieben. Die Kompressoren 44 wirken nicht direkt auf die Ventileinrichtung 41, sondern speisen einen Druckspeicher 65, der wiederum Druckluft an die Ventileinrichtung 41 abgibt. Es ist ferner eine Stromversorgungseinrichtung vorgesehen, die wenigstens einen an Bord des Einschubmoduls 31 befindlichen netzunabhängigen Stromversorger in Form eines Akkumulators 45 aufweist. Dadurch ist das Einschubmodul 31 energietechnisch autark, kann jedoch auch noch zusätzlich einen Netzanschluss zum Anschluss an das Stromnetz aufweisen. Gemäß bevorzugtem Ausführungsbeispiel sind zwei Akkumulatoren vorgesehen.

Es ist ferner eine ebenfalls an Bord des Einschubmoduls 31 befindliche Steuereinheit 46 zur Ansteuerung der Ventileinrichtung 41 vorgesehen. Von der Steuereinheit 46 werden Steuerbefehle zu den Ventilen 42 der Ventileinrichtung 41 übermittelt, wodurch ein Schaltvorgang des angesteuerten bzw. der angesteuerten Ventile 42 stattfindet. Die Steuereinheit 46 ist ferner noch mit Drucksensoren 47 gekoppelt, die ihrerseits im Bereich der Arbeitsanschlüsse oder direkt an den Arbeitsanschlüssen 43 der Ventile 42 sitzen. Dadurch ist es möglich, den im jeweiligen Hubkissen 32 aktuell vorherrschenden Ist-Luftdruck zu ermitteln. Dieser Ist-Luftdruck wird dann zur Steuereinheit 46 übermittelt, wo ein Ist-Sollwert-Vergleich mit einem hinterlegten Maximal-Luftdruck und gegebenenfalls mit einem hinterlegten Mindest-Luftdruck stattfindet. Ist der Maximal-Luftdruck erreicht, so kann durch Schalten des betreffenden Ventils 42 das Aufpumpen des betreffenden Hubkissens 32 gestoppt werden. Ferner ist es möglich, dass bei Unterschreiten des Mindest-Luftdrucks ein Aufpumpen eingeleitet wird.

Es ist ferner noch eine Aktivierungseinrichtung zur Aktivierung der Hubvorrichtung 16 vorgesehen, die mit der Steuereinheit 46 gekoppelt ist. Zur Aktivierungseinrichtung 48 gehört ein Aktivierungsschalter 49, der an einem externen Aktivierungsmodul 50 sitzt, wobei die Signalübertragung zur Steuereinheit 46 drahtlos, insbesondere per Funk erfolgt. Die Aktivierung erfolgt also über eine Fernbedienung. Zweckmäßigerweise lassen sich mit dem Aktivierungsmodul 50 die Hubvorrichtungen mehrerer Warenpräsentationseinrichtungen 11 aktivieren. Zur Aktivierungseinrichtung 58 zählt ferner noch ein Auswahlschalter 51, der zweckmäßigerweise direkt am Einschubmodul 31 sitzt. Der Auswahlschalter 51 ist durch Betätigung per Hand oder mit dem Fuß zwischen einer die Aktivierung mittels des Aktivierungsschalters 49 ermöglichenden Ein-Stellung und einer die Aktivierung blockierenden Aus-Stellung umschaltbar. Die Warenpräsentationseinrichtung 11 muss also zunächst durch den Auswahlschalter 51 freigeschaltet bzw. "scharf gemacht" werden, bevor eine Aktivierung der Hubvorrichtung 16 möglich ist.

An der Rückseite des Einschubmoduls 31 befinden sich Zentrierbohrungen (nicht dargestellt) in die im Aufnahmeschacht 30 befindliche Zentrierstifte einfahren können, wodurch eine Zentrierung des Einschubmoduls 31 im Aufnahmeschacht 30 erfolgt. Ferner ist noch ein schlossartiges Verriegelungselement 55 zum Verriegeln des Einschubmoduls 31 im Aufnahmeschacht 30 vorgesehen. Schließlich kann an der Rückseite des Einschubmoduls 31 noch ein Kontaktschalter (nicht dargestellt) vorgesehen sein, der das korrekte Einstecken des Einzugmoduls 31 detektiert.

Die Warenpräsentationseinrichtung 11 wird in der Regel bereits vollständig mit Waren 23 bestückt angeliefert. Dabei stapeln sich die Waren 23 in mehreren Reihen übereinander, wobei hier eine seitliche Fixierung über die Seitenwände 22 stattfindet. Die Hubkissen 32 befinden sich zunächst noch in ihrer Nichtgebrauchslage eingefaltet im Basisteil 15. Sind nun mehrere Stapellagen an Waren 23 vergriffen, so müsste der Käufer mehr oder weniger weit in die durch die Seitenwände 22 begrenzte Behälteröffnung hineingreifen, um noch an Waren 23 zu kommen. Um diese Unbequemlichkeit zu verhindern, ist die Hubvorrichtung 16 vorgesehen.

Zur Betätigung der Hubvorrichtung 16 wird zunächst der Auswahlschalter 51 in seine Ein-Stellung geschaltet, wodurch eine Aktivierung der Hubvorrichtung 16 möglich ist. Die Aktivierung erfolgt durch Betätigung des Aktivierungsschalters 49, der ein Aktivierungssignal per Funk an die Steuereinheit 46 übermittelt. Die Steuereinheit 46 wiederum übermittelt ein Steuersignal an die Ventileinrichtung, wodurch ein Schaltvorgang initiiert wird, so dass das unterste bzw. oberste Hubkissen 32 aufgeblasen wird. Dabei hebt sich der Hubboden 33 an und somit auch die darauf gestapelten Waren 23.

Durch die Zugfadenanordnung 35 mit den Zugfäden 36 ist gewährleistet, dass beim Aufpumpen Ober- und Unterseite parallel zueinander liegende Auflageflächen 37 bilden, wodurch der Hubboden 33 in seiner horizontalen Lage bleibt, also nicht in Schräglage kommt, wodurch die Waren 23 verrutschen könnten. Das Aufpumpen des Hubkissens 32 wird solange fortgeführt, bis der Maximal-Luftdruck erreicht ist. Dies kann durch den am zugeordneten Ventil 42 sitzenden, den Ist-Luftdruck im Hubkissen 32 messenden Drucksensor 47 ermittelt werden, der wiederum Sensorsignale an die Steuereinheit 46 sendet, wo ein Ist-Sollwert-Vergleich des Luftdrucks stattfindet. Die Steuereinheit 46 generiert wiederum ein Steuerbefehl, der wiederum zu einem Schaltvorgang des betreffenden Ventils 42 führt, wodurch in diesem Falle dann die Druckluftzufuhr unterbrochen wird. Soll der Hubboden 33 noch weiter nach oben gefahren werden, so wird die Hubvorrichtung 16 ein weiteres Mal aktiviert. In der Steuereinheit 46 ist jetzt hinterlegt, dass bereits ein Hubkissen 32 aufgeblasen ist. Dies führt dazu, dass die Steuereinheit 46 ein Steuerbefehl an das Ventil 42 sendet, das dem bereits aufgeblasenen Hubkissen 32 benachbarten Hubkissen 32 zugeordnet ist. Dieses benachbarte Hubkissen 32 wird dann aufgepumpt. Durch Aufpumpen weiterer Hubkissen 32 ist es möglich, den Hubboden 33 noch weiter nach oben zu fahren.

Ist die letzte Stapellage an Waren 23 vergriffen, so können die Hubkissen 32 wieder entlüftet werden, wodurch der Hubboden 33 wieder nach unten in seine in Figur 3 dargestellte Lage fährt, in der er im Wesentlichen mit der Rahmenoberkante des Rahmens 17 abschließt. Die Seitenwände aus Pappmaterial können dann durch Entriegeln der Rasteinrichtung aus der Aufnahmeöffnung 41 herausgezogen und entsorgt werden. Das Modul aus Tragpalette 12 und Basisteil 15 kann dann wieder zum Lieferanten zurück geschickt werden, der dann wiederum eine Bestückung mit Waren 23 vornimmt, oder es ist möglich, dass vor Ort eine Bestückung mit neuen ggf. auch anderen Waren 23 erfolgt. Bei Beschädigung oder Betriebsstörung kann das Einschubmodul 31 in einfacher Weise aus dem Aufnahmeschacht 30 herausgezogen und gegebenenfalls gegen ein Neues ausgetauscht werden. Ferner ist es möglich, bei Beschädigung oder Funktionsstörung der Hubvorrichtung 16 die Basisteile 15 gegeneinander auszutauschen. Insgesamt wird durch die erfindungsgemäße Warenpräsentationseinrichtung 11 eine größtmögliche Flexibilität erreicht. Der modulare Aufbau erlaubt eine Anpassung an unterschiedliche Umgebungen. Die Laden- und Stellflächen werden optimal ausgenutzt.

## Patentansprüche

1. Warenpräsentationseinrichtung, mit einem über Füße (14) abstellbaren Basisteil (15), das eine Hubvorrichtung (16) mit einem über Hubmittel anhebbaren, Waren tragenden Hubboden (33) und einer der Hubvorrichtung (16) zugeordneten Ansteuereinrichtung (40) zum Ansteuern der Hubmittel aufweist, **dadurch gekennzeichnet, dass** die Ansteuereinrichtung (40) Bestandteil eines in einen Aufnahmeschacht (30) am Basisteil (15) einschiebbaren, oberhalb der Füße (14) angeordneten, austauschbaren Einschubmoduls (31) ist.

2. Warenpräsentationsvorrichtung nach Anspruch 1, **dadurch gekennzeichnet, dass** die Füße (14) Bestandteil einer vom Basisteil (15) separaten, das Basisteil (15) tragenden Tragpalette (12) sind.

3. Warenpräsentationseinrichtung nach Anspruch 1 oder 2, **gekennzeichnet durch** eine fluidische Hubvorrichtung (16) mit Hubmitteln in Form von mehreren unabhängig voneinander mittels Druckfluid befüllbaren fluidischen Aktoren.

4. Warenpräsentationseinrichtung nach Anspruch 3, **dadurch gekennzeichnet, dass** die fluidischen Aktoren von mittels Fluiddruck aufweitbaren Hubkissen (32) gebildet sind.

5. Warenpräsentationseinrichtung nach Anspruch 4, **dadurch gekennzeichnet, dass** den Hubkissen (32) jeweils eine Aufweitungsbegrenzungseinrichtung zur Begrenzung der Hubkissenaufweitung zugeordnet ist, derart, dass im aufgeweiteten Gebrauchszustand eines jeweiligen Hubkissens (32) Ober- und Unterseite des Hubkissens (32) parallel zueinander ausgerichtete Auflageflächen (37) bilden.

6. Warenpräsentationseinrichtung nach Anspruch 5, **dadurch gekennzeichnet, dass** die Aufweitungsbegrenzungseinrichtung durch eine im jeweiligen Hubkissen (32) integrierte Zugfadenanordnung (35) mit mehreren Zugfäden (36) gebildet ist.

7. Warenpräsentationseinrichtung nach einem der vorhergehenden Ansprüche, **dadurch gekennzeichnet, dass** das Einschubmodul (31) ein Modulgehäuse (39) aufweist, in dem Komponenten der Ansteuereinrichtung (40) untergebracht sind.

8. Warenpräsentationseinrichtung nach einem der vorhergehenden Ansprüche, **dadurch gekennzeichnet, dass** die Ansteuereinrichtung (40) eine Ventileinrichtung (41) zur Ansteuerung der Hubmittel, eine Steuereinheit (46) zur Ansteuerung der Ventileinrichtung (41), eine der Ventileinrichtung (41) vorgeschaltete Fluidversorgungseinrichtung, eine Stromversorgungseinrichtung und eine mit der Steuereinheit (46) gekoppelte Aktivierungseinrichtung (48) zur Aktivierung der Hubvorrichtung (16) aufweist.

9. Warenpräsentationseinrichtung nach Anspruch 9, **dadurch gekennzeichnet, dass** die Ansteuereinrichtung (40) insbesondere am Ausgang der Ventileinrichtung (40) sitzende, mit der Steuereinheit (46) gekoppelte Drucksensoren (47) zur Drucküberwachung des in den fluidischen Aktoren, insbesondere Hubkissen (32), herrschenden Ist-Fluiddrucks aufweist.

10. Warenpräsentationseinrichtung nach Anspruch 8 oder 9, **dadurch gekennzeichnet, dass** die Fluidversorgungseinrichtung wenigstens einen an Bord des Einschubmoduls (31) befindlichen Fluiddruckerzeuger, insbesondere Kompressor (44), aufweist.

11. Warenpräsentationseinrichtung nach einem der Ansprüche 8 bis 10, **dadurch gekennzeichnet, dass** die Fluidversorgungseinrichtung wenigstens einen der Ventileinrichtung (41) vorgeschalteten, insbesondere an Bord des Einschubmoduls (31) befindlichen Druckspeicher aufweist.

12. Warenpräsentationseinrichtung nach einem der Ansprüche 9 bis 12, **dadurch gekennzeichnet, dass** die Stromversorgungseinrichtung wenigstens eine an Bord des Einschubmoduls (31) befindlichen netztunabhängigen Stromversorger, insbesondere Akkumulator (45), aufweist.

13. Warenpräsentationseinrichtung nach einem der Ansprüche 8 bis 12, **dadurch gekennzeichnet, dass** die Aktivierungseinrichtung (48) einen mittels Signalübertragung von Aktivierungssignalen mit der Steuereinheit gekoppelten Aktivierungsschalter (49) aufweist.

14. Warenpräsentationseinrichtung nach Anspruch 13, **dadurch gekennzeichnet, dass** der Aktivierungsschalter (49) an einem externen Aktivierungsmodul (50) sitzt und die Signalübertragung zur Steuereinheit (46) drahtlos, insbesondere per Funk, erfolgt.

15. Warenpräsentationseinrichtung nach Anspruch 13 oder 14, **dadurch gekennzeichnet, dass** die Aktivierungseinrichtung (48) einen Auswahlschalter (51) aufweist, der zwischen einer die Aktivierung mittels des Aktivierungsschalters (49) ermöglichenden Ein-Stellung und einer die Aktivierung blockierenden Aus-Stellung umschaltbar ist.

16. Warenpräsentationseinrichtung nach Anspruch 15, **dadurch gekennzeichnet, dass** der Auswahlschalter (51) am Einschubmodul (31) angeordnet ist.

17. Warenpräsentationseinrichtung nach einem der vorhergehenden Ansprüche, **dadurch gekennzeichnet, dass** das Basisteil (15) einen Rahmen (17) aufweist, in dessen Rahmenwand (19) eine zur Rahmenoberkante (20) hin offenen schlitzartige Aufnahmeöffnung (21) zum Einstecken von Seitenwänden (22) ausgebildet ist.

18. Warenpräsentationseinrichtung nach Anspruch 17, **dadurch gekennzeichnet, dass** dem Rahmen eine Rasteinrichtung (25) zum Verrasten der Seitenwände (22) in der Aufnahmeöffnung (21) zugeordnet ist.
